# FASCICULE DE BREVET EUROPEEN

(11) **EP 0 481 877 B1**
(45) Date de publication et mention de la délivrance du brevet: **26.04.1995**
(21) Numéro de dépôt: 91402750.3
(22) Date de dépôt: 15.10.1991
(51) Int. Cl.: G02B 6/42

(54) **Dispositif d'alignement d'une fibre optique et d'un composant optoélectronique**
Ausrichtvorrichtung von einer optischen Faser und von einem optoelektronischen Bauelement
Alignment device for an optical fibre and for an optoelectronic component

(30) Priorité: 19.10.1990 FR 9012958
(43) Date de publication de la demande: 22.04.1992
(73) Titulaire: THOMSON-CSF SEMICONDUCTEURS SPECIFIQUES, 92800 Puteaux (FR)
(72) Inventeur: Avelange, Gérôme, F-92045 Paris la Défense (FR); Tournereau, Alain, F-92045 Paris la Défense (FR)
(74) Mandataire: Taboureau, James

(56) Documents cités:
- EP-A- 0 100 086
- DE-A- 3 433 717
- PROCEEDINGS OF THE SOCIETY OF PHOTO-OPTICAL INSTRUMENTATION ENGINEERS, SPIE, vol. 1043, 18 janvier 1989, Los Angeles, CA, USA, pp. 338-343 ; S. ENOCHS : "Opto-mechanical packaging for extended temperature performance"
- PATENT ABSTRACTS OF JAPAN, vol. 13, no. 391 (P-926)(3739), 30 août 1989 ; & JP-A-1 140 105

## Description

La présente invention concerne un dispositif d'alignement et de fixation d'une fibre optique et d'un composant optoélectronique actif.

Les composants optoélectroniques concernés par l'invention sont ceux de type semiconducteur, tels que laser, diode électroluminescente, photodiode, phototransistor, par exemple. On sait que pour associer ces composants à une fibre optique, il est nécessaire d'aligner l'axe optique de la fibre sur l'axe optique du composant, avec une extrême précision : par exemple avec un laser, l'alignement doit être réalisé au micron près, ou à mieux qu'un micron.

De façon générale, deux procédés permettent d'aligner une fibre optique sur un composant optoélectronique. Le premier consiste à déplacer la fibre au sein d'une goutte d'un produit solidifiable placé en face du composant. Ce produit est soit une goutte de soudure tendre fondue, soit une goutte de colle polymérisable par un éclair lumineux. Au cours d'un réglage en dynamique, la goutte est solidifiée lorsque l'optimum de couplage est atteint. L'inconvénient de ce procédé est qu'au cours de la solidification de la goutte, les forces de contraction déplacent la fibre et la cisaillent parfois.

Le second procédé consiste à fixer le composant sur un premier support et la fibre sur un second support, ces deux supports présentant deux surfaces planes communes qui sont orthogonales entre elles. Par déplacement du premier support par rapport au second selon un premier plan, on peut régler selon deux directions de l'espace; appellons-les x et y. Puis par déplacement de deux supports selon un second plan, on peut régler selon la troisième direction, qui est z. L'inconvénient de ce procédé est qu'il nécessite deux systèmes de glissement, c'est à dire quatre surfaces planes usinées à mieux qu'un micron. La géométrie du support, et leur usinage rendent le procédé coûteux, donc également coûteux le dispositif dans lequel une fibre optique est alignée sur un composant selon ce second procédé.

Par ailleurs, pour éviter le risque de cisaillement par une goutte de soudure ou de colle, il est courant de fixer la fibre optique sur son embase au moyen d'un collier métallique, dont la section est en oméga . A titre d'exemple, le brevet européen EP-A-0 100 086, dont la priorité est du 27 juillet 1982, montre comment, après l'alignement d'une fibre optique sur un laser, le positionnement du tube support de la fibre est maintenu au moyen d'un ancrage métallique, composé d'une pièce en forme de Ω, soudée par laser sur une autre pièce, de centrage. mais cette pièce d'ancrage ne permet pas l'alignement optique, qui a été réalisé auparavant selon le second procédé cité ci-dessus.

Le dispositif selon l'invention évite les inconvénients des deux procédés de l'art antérieur. Le produit ne met en oeuvre qu'une pièce simple, formée sans précision, pour tenir la fibre, et une fente dans le support du composant, cette fente coopérant avec la dite pièce. Le procédé d'alignement consiste à introduire la pièce dans la fente, et à la déplacer ou à l'incliner jusqu'à obtenir l'alignement. A l'optimum de positionnement réciproque, la position de la pièce est figée par soudure au laser de puissance.

De façon plus précise, l'invention consiste en un dispositif d'alignement et de fixation d'une fibre optique et d'un composant optoélectronique comprenant une embase commune au composant optoélectronique et à la fibre, qui est munie à son extrêmité d'un manchon métallique, ce dispositif étant caractérisé en ce que, d'une part, le manchon est serré au moyen d'une bande métallique repliée autour du manchon, en forme de pince comprenant deux pattes, elle-mêmes pliées à hauteur du manchon avec effet de ressort, et en ce que, d'autre part, l'embase commune comprend une fente, parallèle à l'axe optique du composant, les pattes de la pince qui traversent la fente s'appuyant par l'effet de ressort sur les arêtes de la fente.

L'invention sera mieux comprise, et ses avantages ressortiront mieux de la description suivante d'un exemple de réalisation, en liaison avec les trois figures jointes qui représentent le dispositif selon l'invention, selon deux coupes verticales et vu de trois-quart dans l'espace.

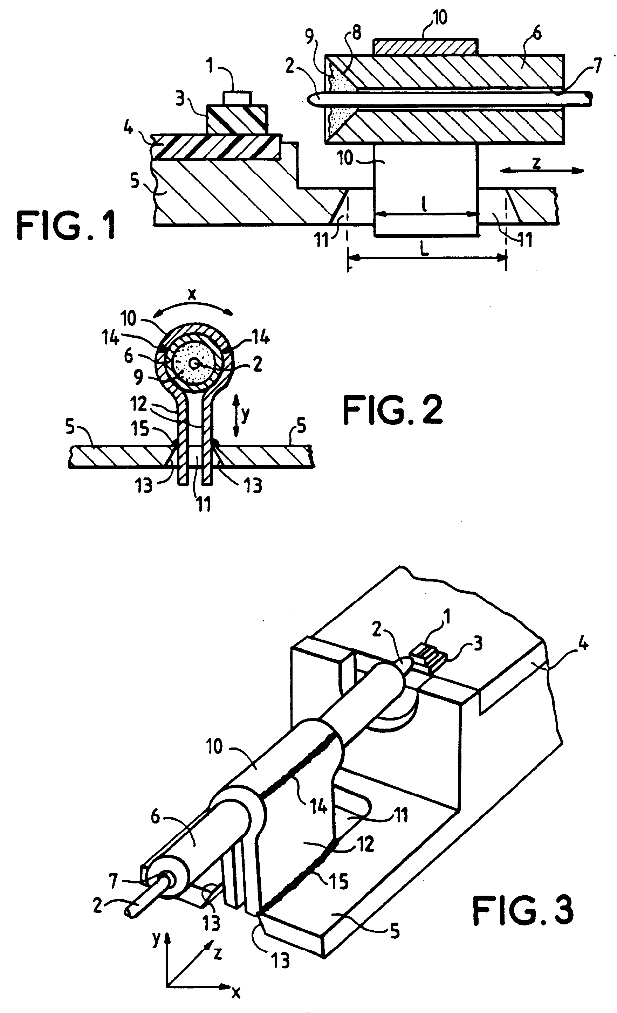

La figure 1 montre une vue en coupe longitudinale qui permet d'exposer à la fois le problème et sa solution. L'invention sera exposée en s'appuyant sur l'exemple d'un laser, ce qui ne limite nullement la portée de l'invention sur d'autres types de couplages optiques.

Un dispositif optoélectronique tel qu'une tête optique comprend essentiellement un laser 1 et une fibre optique 2. Le laser est fixé sur un piédestal 3 qui repose sur un isolant 4, en surface d'une embase métallique 5. La fibre optique 2 est avantageusement munie d'un manchon de manipulation, conforme à la demande de brevet français n° 89 14771 déposée le 10 novembre 1989 par la demanderesse. Il s'agit d'un tube métallique capillaire 6, percé longitudinalement d'un trou 7 dont le diamètre est plus grand que le diamètre de la fibre 2, et dont une extrêmité est biseautée en 8. La fibre 2 passe aisément dans le capillaire 7, et elle est mobilisée par un bouchon de pâte de verre 9. L'intérêt de ce manchon est de ne pas nécessiter d'usinage rigoureux du capillaire, et de reporter les réglages sur le positionnement du manchon, puisqu'il est lié à la fibre. Le problème de l'alignement de la fibre optique 2 sur l'axe optique du laser 1 est donc ramené à celui du positionnement du manchon 6 par rapport à l'axe optique du laser 1.

Le dispositif selon l'invention ne comprend que deux moyens à mettre en oeuvre.

Le premier moyen, solidaire de la fibre 2 est une pièce destinée à maintenir le manchon 6, et à le positionner le long de l'axe optique du laser 1. Ce moyen est très simple : c'est une bande métallique repliée pour donner une pince 10, en forme d'"épingle à cheveux" ou de "trou de serrure". La forme de cette pince 10 ressort mieux des figures 2 et 3. Le second moyen, solidaire du laser 1, est une fente 11 pratiquée dans l'embase métallique 5, parallèlement à l'axe optique du laser 1. Cette fente a une longueur "L" un peu plus grande que la largeur "l" de la pince 10, de sorte que celle-ci puisse être déplacée lorsqu'elle est introduite dans la fente 11.

La pince 10 est formée autour du manchon 6 -voir figure 2- de façon à le serrer, mais sa forme est telle qu'elle présente une certaine élasticité : les pattes 12 sont pliées, à hauteur du manchon 6, de façon à s'appuyer avec effet de ressort contre les bords biseautés 13 de la fente 11, ce qui permet de maintenir en place la fibre 2 et son manchon 6, en attendant la fixation définitive par brasure.

L'ensemble fibre-manchon-pince dispose de trois degrés de liberté : selon un axe "z" par glissement le long de la fente 11, selon l'axe "y" par enfoncement dans la fente, et selon l'axe "x" par rotation de la pince 10 en s'appuyant sur les arêtes 13 de la fente 11.

Le procédé d'alignement de la fibre sur le composant optoélectronique est dynamique, c'est à dire que les réglages sont guidés par les résultats du dispositif en fonctionnement.

Le laser étant considéré comme un point fixe, de référence, la fibre est manipulée au moyen d'un micromanipulateur - qui n'est pas représenté ici- qui serre la pince 10. Par glissement de la pince 10 le long de la fente 11, puis par translation perpendiculairement à la même fente et simultanément par rotation autour des arêtes 13, le point de couplage optimum est rapidement déterminé. La position de la fibre 2 par rapport à la pince 10 est fixée par un cordon de soudure 14, ou par quelques points de soudure, effectués à l'aide d'un laser de puissance, de type YAG par exemple.

Après ce premier tir laser, il est préférable de contrôler que le réglage optique n'a pas été détérioré, par exemple par la dilatation des pièces. Le réglage étant acquis, ou restauré, la pince 10 est fixée sur l'embase 5 au moyen d'un ou deux cordons de soudure 15, le long des arêtes 13.

L'ordre des opérations peut bien évidemment être inversé.

A titre d'exemple non limitatif, les pièces métalliques en présence sont en alliage se déformant peu en température : FeNi ou FeNiCo. Le manchon 6 a un diamètre de 1, 5 mm : il est serré dans la pince 10 qui a 5 mm de haut et 3 mm de large. La fente 11 est de dimensions comparables : 8 mm de long pour 2 mm de large.

## Revendications

1. Dispositif d'alignement et de fixation d'une fibre optique (2) et d'un composant optoélectronique (1), comprenant une embase (5) commune au composant optoélectronique (1) et à la fibre (2), qui est munie à son extrêmité d'un manchon métallique (6), ce dispositif étant caractérisé en ce que d'une part, le manchon (6) est serré au moyen d'une bande métallique repliée autour du manchon (6), en forme de pince (10) comprenant deux pattes (12), elles-mêmes pliées à hauteur du manchon (6) avec effet de ressort, et en ce que, d'autre part, l'embase (5) commune comprend une fente (11), parallèle à l'axe optique du composant, les pattes (12) de la pince (10) qui traversent la fente (11) s'appuyant par l'effet de ressort sur les arêtes (13) de la fente (11).

2. Dispositif selon la revendication 1, caractérisé en ce que la fente (11) a une longueur (L) supérieure à la largeur (1) de la pince (10), de façon à permettre le glissement de la pince (10) le long de la fente (11).

3. Dispositif selon la revendication 1, caractérisé en ce que les arêtes de la fente (11) en contact avec la pince (10) sont biseautées (13), de façon à permettre la rotation de la pince (10) dans la fente (11).

4. Dispositif selon la revendication 1, caractérisé en ce que la pince (10) est soudée sur le manchon (6), d'une part, et sur l'embase (5), le long des arêtes (13), d'autre part, au moyen de deux soudures (14,15) par laser de puissance.

## Patentansprüche

1. Vorrichtung zum Ausrichten und Fixieren einer Lichtleitfaser (2) bezüglich eines opto-elektronischen Bauteils (1) mit einer für das opto-elektronische Bauteil (1) und die an ihrem Ende eine metallische Manschette (6) tragende Faser (2) gemeinsamen Basis, dadurch gekennzeichnet, daß einerseits die Manschette (6) mithilfe eines Metallbands eingespannt wird, das um die Manschette (6) in Form einer Klammer (10) mit zwei ihrerseits in Höhe der Manschette (6) mit Federwirkung umgebogene Laschen (12) herumgebogen ist, und daß andererseits die gemeinsame Basis (5) einen Schlitz (11) parallel zur optischen Achse des Bauteils aufweist, wobei die Laschen (12) der Klammer (10), die durch den Schlitz (11) dringen, sich federnd auf den Kanten (13) des Schlitzes (11) abstützen.

2. Vorrichtung nach Anspruch 1, dadurch gekennzeichnet, daß die Länge (L) des Schlitzes (11) größer als die Breite (1) der Klammer (10) ist, so daß die Klammer (10) entlang des Schlitzes (11) gleiten kann.

3. Vorrichtung nach Anspruch 1, dadurch gekennzeichnet, daß die Kanten des Schlitzes (11), die mit der Klammer (10) in Berührung stehen, eine Abschrägung (13) besitzen, so daß eine Drehung der Klammer (10) im Schlitz (11) möglich ist.

4. Vorrichtung nach Anspruch 1, dadurch gekennzeichnet, daß die Klammer (10) auf die Manschette (6) einerseits und auf die Basis (5) entlang der Kanten (13) andererseits mit Hilfe zweier Schweißstellen (14, 15) mit Hilfe eines Leistungslasers aufgeschweißt ist.

## Claims

1. Device for the alignment and for the fixing of an optical fibre (2) and of an optoelectronic component (1), comprising a base (5) common to the optoelectronic component (1) and to the fibre (2), which fibre is fitted at its end with a metal ferrule (6), this device being characterized in that, on the one hand, the ferrule (6) is gripped by means of a metal band bent over, around the ferrule (6), into the form of a clamp (10) comprising two feet (12) which are themselves bent at the height of the ferrule (6), having a spring effect and in that, on the other hand, the common base (5) comprises a slot (11) parallel to the optical axis of the component, the feet (12) of the clamp (10) which pass through the slot (11), bearing on the sharp edges (13) of the slot (11) by the spring effect.

2. Device according to Claim 1, characterized in that the slot (11) has a length (L) greater than the width (1) of the clamp (10) so as to permit sliding of the clamp (10) along the slot (11).

3. Device according to Claim 1, characterized in that the sharp edges of the slot (11) in contact with the clamp (10) are bevelled (13) so as to permit rotation of the clamp (10) in the slot (11).

4. Device according to Claim 1, characterized in that the clamp (10) is welded, on the one hand, to the ferrule (6) and, on the other hand, to the base (5), along the sharp edges (13), by means of two power-laser welds (14, 15).
